# EUROPÄISCHE PATENTSCHRIFT

(11) **EP 2 735 040 B1**
(45) Veröffentlichungstag und Bekanntmachung des Hinweises auf die Patenterteilung: **02.08.2017**
(21) Anmeldenummer: 12798155.3
(22) Anmeldetag: 23.11.2012
(51) Int. Cl.: H01M 2/10, H01M 2/20, H01M 2/34, B60L 11/18

(54) **HOCHVOLTSPEICHER**
HIGH VOLTAGE BATTERY
ACCUMULATEUR HAUTE TENSION

(30) Priorität: 24.11.2011 DE 102011087032
(43) Veröffentlichungstag der Anmeldung: 28.05.2014
(73) Patentinhaber: Bayerische Motoren Werke Aktiengesellschaft, 80809 München (DE); Diehl Metal Applications GmbH, 14167 Berlin (DE)
(72) Erfinder: GOESMANN, Hubertus, 89564 Auernheim (DE); BORN, Christoph, 80935 München (DE); HECK, Harald, 90455 Nürnberg (DE); WARMUTH, Frank, Dr., 14469 Postdam (DE)
(74) Vertreter: Hoefer & Partner Patentanwälte mbB
(86) Internationale Anmeldenummer: PCT/EP2012/004858
(87) Internationale Veröffentlichungsnummer: WO 2013/075840

(56) Entgegenhaltungen:
- EP-A1- 1 775 784
- EP-A1- 2 339 672
- EP-A1- 2 445 032
- US-A1- 2010 073 005

## Beschreibung

Die Erfindung betrifft einen Hochvoltspeicher zur Spannungsversorgung, insbesondere eines Kraftfahrzeugs.

In einem üblicherweise als Batterie bezeichneten Hochvoltspeicher zur Spannungsversorgung eines Kraftfahrzeugs kommen Energiespeichermodule zum Antrieb des Fahrzeugs, beispielsweise von Elektrofahrzeugen oder Hybridfahrzeugen, zum Einsatz. Ein jeweiliges Energiespeichermodul besteht typischerweise aus mehreren gestapelten Speicherzellen. Die einzelnen Speicherzellen enthalten elektrochemische Zellen der Batterie. Der Stapel aus den einzelnen Speicherzellen wird zumeist verspannt. Die Verspannung dient neben der mechanischen Fixierung der Module zueinander insbesondere dazu, eine Verformung durch Gasdruckänderungen, welche beim Betrieb in den im Inneren der Module angeordneten elektrochemischen Zellen auftreten, entgegenzuwirken. Die mehreren Speicherzellen der Energiespeichermodule müssen untereinander elektrisch verbunden werden. Ferner muss ein Berührschutz während der Montage und des Betriebs gewährleistet sind. Die in den Speicherzellen entstehenden Gase müssen aus dem Hochvoltspeicher austreten können.

Die US2010/073005A1 offenbart ein Batteriesystem bei dem entstehende Gase über einen Abführkanal austreten können.

Die EP2339672A1 offenbart ferner ein Batteriemodul bei dem entstehende Gase über eine Öffnung im Deckel des Batteriemoduls austreten können.

Die EP2445032A1 offenbart ein Batteriemodul bei dem entstehende Gase über einen Abführkanal austreten können.

Es ist Aufgabe der vorliegenden Erfindung, einen Hochvoltspeicher zur Spannungsversorgung anzugeben, der bei kostengünstiger Herstellung und Montage einen ausreichenden Berührschutz gewährleistet, wobei gleichzeitig ein Gasaustritt aus dem Inneren des Hochvoltspeichers ermöglicht werden soll.

Die Aufgabe wird gelöst durch die Merkmale des unabhängigen Anspruchs. Die abhängigen Ansprüche haben bevorzugte Weiterbildungen der Erfindung zum Gegenstand.

Somit wird die Aufgabe gelöst durch einen Hochvoltspeicher zur Spannungsversorgung, insbesondere eines Kraftfahrzeugs. Der Hochvoltspeicher umfasst ein Energiespeichermodul mit mehreren elektrochemischen Speicherzellen und mit einer die mehreren Speicherzellen aufnehmenden Wandung. Dabei weist jede der Speicherzellen zumindest zwei elektrische Anschlussterminals auf. Des Weiteren umfasst erfindungsgemäß der Hochvoltspeicher einen Aufsatz zum Kontaktieren und Abdecken der Anschlussterminals. Der Aufsatz überlappt dabei die Wandung berührungslos. Durch diese Überlappung zwischen der Wandung des Energiespeichermoduls und des Aufsatzes wird der Berührschutz sichergestellt. Die Überlappung ist dabei insbesondere so ausgelegt, dass ein Monteur nicht unter den Aufsatz und somit zu den elektrochemischen Speicherzellen bzw. zu den Anschlussterminals greifen kann. Dadurch dass die Überlappung berührungslos ausgestaltet ist entsteht ein kleiner Spalt zwischen Aufsatz und Wandung, so dass ein in den Speicherzellen erzeugtes Gas austreten kann. Dadurch wird ein zu hoher Innendruck im Energiespeichermodul vermieden. Der Aufsatz kann bevorzugt aus Kunststoff durch eine Spritzgusstechnik gefertigt werden. Der Gasaustritt erfolgt durch den kleinen Spalt im Überlappungsbereich. Es bedarf keiner eigenen Kanäle für die Gasabfuhr und es sind keine zusätzlichen Isolierungen nötig.

In bevorzugter Ausführung ist vorgesehen, dass die Speicherzellen prismatische Speicherzellen sind, die, zu mindestens einer Reihe gespaltet, hintereinander angeordnet und zwischen zwei Endplatten über Zuganker verspannt sind. Die beiden Endplatten und die beiden Zuganker bilden zusammen die Wandung des Energiespeichermoduls. Insbesondere sind die Zuganker und die Endplatten derart dimensioniert, dass sie die gestapelten Speicherzellen seitlich vollständig abdecken. Der Aufsatz deckt bevorzugt die vollständige Oberseite des Energiespeichermoduls ab. Auf der Unterseite befindet sich bevorzugt ein Boden. Dadurch sind die einzelnen Speicherzellen durch die Wandung, den Aufsatz und den Boden vollständig eingeschlossen.

Des Weiteren ist vorgesehen, dass die Wandung einen vom Aufsatz überlappten, nach innen versetzten Absatz umfasst. Dieser nach innen versetzte Absatz kann an den Endplatten und/oder an den Zugankern ausgebildet sein. Weiters umfasst der Absatz einen ersten Anteil, der sich senkrecht zur Wandung nach innen erstreckt. Am Ende dieses ersten Anteils befindet sich ein zweiter Anteil des Absatzes. Dieser zweite Anteil erstreckt sich parallel zur Wandung bzw. senkrecht zum ersten Anteil. Dadurch wird ein nach innen gerichteter oder nach innen versetzter Absatz gebildet. Dieser Absatz wird von dem Aufsatz überlappt. Zwischen dem Absatz und dem Aufsatz ist dann die Überlappung mit dem Spalt ausgebildet.

Besonders bevorzugt ist der kleinste Spalt zwischen Aufsatz und Wandung zumindest 1 mm, insbesondere zumindest 2 mm, groß. Dadurch wird zum Einen sichergestellt, dass der Benutzer nicht durch den Spalt hindurch greifen kann. Zum Anderen ist ein ausreichender Spalt für den Gasaustritt gewährleistet.

In besonders bevorzugter Ausführung ist vorgesehen, dass der Aufsatz eine Trägerplatte mit mehreren Zellverbindern und einem Deckel umfasst. Die Trägerplatte ist insbesondere als Spritzgussteil aus Kunststoff gefertigt. In diese Trägerplatte werden mehrere metallene Zellverbinder eingesetzt. Die Zellverbinder dienen zum Kontaktieren der Anschlussterminals und zum Verbinden mehrerer Anschlussterminals verschiedener Speicherzellen untereinander. An diese Zellverbinder wird beispielsweise ein Kabelbaum angeschlossen. Der Deckel wird auf die Trägerplatte und insbesondere auf die Zellverbinder aufgesetzt. Insbesondere ist vorgesehen, dass der Deckel die komplette Oberseite der Trägerplatte vollständig abdeckt. Bevorzugt überlappt die Trägerplatte, als Bestandteil des Aufsatzes, die Wandung berührungslos. Somit ist auch schon bereits vor der Montage des Deckels sichergestellt, dass ein Monteur nicht zwischen Trägerplatte und Wandung zu den Anschlussterminals hindurchgreifen kann.

Des Weiteren ist in bevorzugter Ausführung vorgesehen, dass die Anschlussterminals aller Speicherzellen zu einer Anschlussfläche hin ausgerichtet sind. Diese eine Anschlussfläche ist insbesondere die Oberseite des Energiespeichermoduls. Durch diese einseitige Ausrichtung aller Anschlussterminals können sämtliche Anschlussterminals mit einem gemeinsamen Aufsatz kontaktiert und abgedeckt werden.

Bevorzugt überlappt der Aufsatz vollumfänglich die Wandung. Dies bedeutet, dass der Aufsatz entlang des gesamten Umfangs des Energiespeichermoduls die Wandung, insbesondere die beiden Endplatten und die beiden Zuganker überlappt. Diese Überlappung muss nicht vollumfänglich berührungslos ausgestaltet sein. Es ist ausreichend, wenn bestimmte Anteile der Überlappung entlang des Umfangs berührungslos sind und somit der Spalt für den Gasaustritt gebildet wird.

Im Folgenden wird ein Ausführungsbeispiel der Erfindung anhand der begleitenden Zeichnung genauer erläutert. Dabei zeigen:
- Figur 1: ein Energiespeichermodul des erfindungsgemäßen Hochvoltspeichers gemäß einem Ausführungsbeispiel,
- Figur 2: eine Schnittansicht durch den erfindungsgemäßen Hochvoltspeicher gemäß dem Ausführungsbeispiel, und

Figur 3 einen Detailausschnitt aus Figur 2.

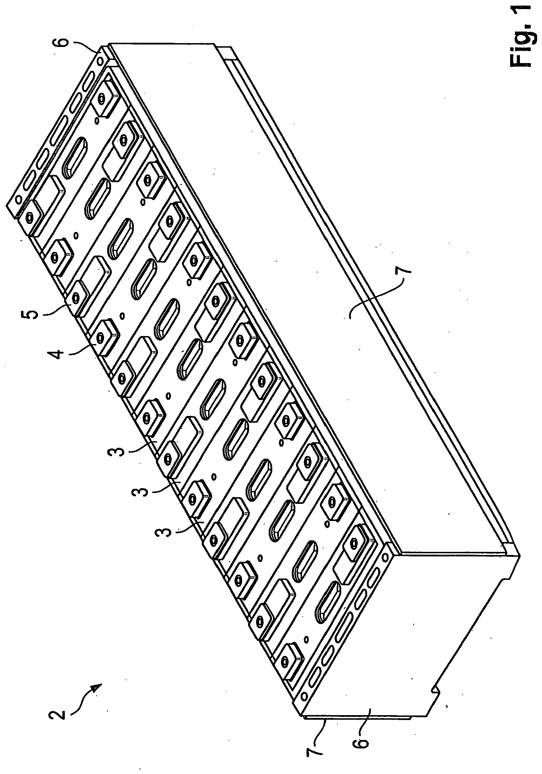

Im Folgenden wird anhand der Figuren 1 bis 3 ein Ausführungsbeispiel des erfindungsgemäßen Hochvoltspeichers 1 genauer erläutert.

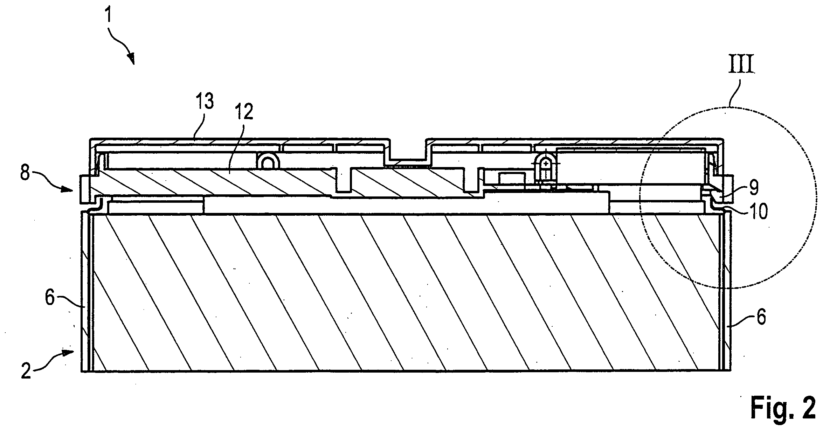

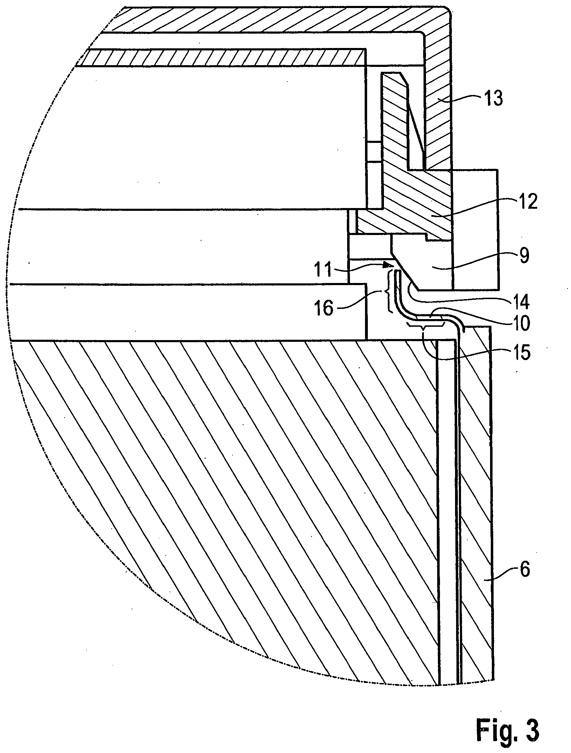

Figur 1 zeigt ein Energiespeichermodul 2 des Hochvoltspeichers 1 noch vor der Montage eines Aufsatzes 8 (siehe Figuren 2 und 3). Das Energiespeichermodul 2 umfasst im dargestellten Ausführungsbeispiel zwölf prismatische Speicherzellen 3. Die Speicherzellen 3 sind hintereinander gestapelt. Jede Speicherzelle 3 weist ein erstes elektrisches Anschlussterminal 4 mit erster Polarität und ein zweites elektrisches Anschlussterminal 5 mit einer zweiten Polarität auf. Am Anfang und am Ende der gestapelten Speicherzellen befindet sich je eine Endplatte 6. Die beiden Endplatten 6 sind über zwei Zuganker 7 miteinander verbunden. Die beiden Endplatten 6 und die beiden Zuganker 7 bilden miteinander eine Wandung 6, 7 des Energiespeichermoduls 2. Innerhalb dieser Wandung 6, 7 sind die einzelnen Speicherzellen 3 aufgenommen.

Figur 2 zeigt einen Schnitt durch den Hochvoltspeicher 1. Dieser Hochvoltspeicher 1 umfasst das in Figur 1 dargestellte Energiespeichermodul 2 sowie einen Aufsatz 8. Dieser Aufsatz 8 deckt die vollständige Oberseite mit den Anschlussterminals 4, 5 des Energiespeichermoduls 2 ab. Der Aufsatz 8 umfasst eine Trägerplatte 12 und einen Deckel 13. Die Trägerplatte 12 und der Deckel 13 sind als Kunststoffspritzgussteile ausgestaltet. In die Trägerplatte 12 werden mehrere metallene Zellverbinder eingesetzt. Diese Zellverbinder kontaktieren die einzelnen Anschlussterminals 4, 5 und verbinden einzelne Anschlussterminals 4, 5 unterschiedlicher Speicherzellen 3 miteinander. Nach oben hin wird die Trägerplatte und insbesondere diese Zellverbinder mit dem Deckel 13 abgedeckt.

Der Aufsatz 8, insbesondere die Trägerplatte 12, überlappt die Wandung 6, 7 des Energiespeichermoduls 2. Diese Überlappung ist zumindest teilweise berührungslos ausgestaltet, so dass ein Gasaustritt aus dem Inneren des Energiespeichermoduls 2 nach außen gewährleistet ist. Die Überlappung stellt gleichzeitig sicher, dass ein Monteur nicht zwischen Aufsatz 8 und Wandung 6, 7 zu den Speicherzellen 2 bzw. den Anschlussterminals 4, 5 durchgreifen kann.

Die Ausgestaltung dieser Überlappung am Hochvoltspeicher 1 zeigt im Detail Figur 3. Gemäß Figur 3 umfasst die Endplatte 6 einen nach innen versetzten Absatz 10. Dieser Absatz 10 umfasst einen ersten Anteil 15 und einen zweiten Anteil 16. Der erste Anteil 15 ist im Wesentlichen senkrecht zur Endplatte 6 nach innen gerichtet. Vom Ende dieses ersten Anteils 15 erstreckt sich parallel zur Endplatte 6 der zweite Anteil 16 nach oben. Dieser Absatz 10 wird von einem Fortsatz 9 der Trägerplatte 12 überlappt. Im hier dargestellten Ausführungsbeispiel umgreift somit der Aufsatz 8 die Wandung 6, 7 von außen. Zwischen dem Absatz 10 und dem Fortsatz 9 entsteht ein Spalt 11. Hierzu ist am Fortsatz 9 eine innenseitige Phase 14 ausgebildet. Der Spalt 11 ist so bemessen, dass ein Monteur mit der Hand nicht hindurchgreifen kann. Allerdings ist der Spalt 11 auch groß genug, um einen ausreichenden Gasaustritt aus dem Inneren des Energiespeichermoduls 2 zu gewährleisten.

Die Überlappung und der Spalt 11 können sowohl an den Endplatten 6 als auch an den Zugankern 7 ausgebildet sein. Dabei muss die Überlappung nicht vollumfänglich berührungslos sein. Es ist ausreichend, wenn an bestimmten Stellen die Überlappung zwischen Aufsatz 8 und Wandung 6, 7 berührungslos ist, so dass an diesem Stellen Gas austreten kann.

Erfindungsgemäß wird zwischen dem Aufsatz 8 und der Wandung 6, 7 des Energiespeichermoduls 2 eine Labyrinthstruktur ausgestaltet. Die bevorzugt verwendete Kunststoffspritzgusstechnik für die Trägerplatte 12 und den Deckel 13 ermöglicht ohne zu große Herstellungskosten eine komplexe Gestaltung dieser Bauteile. Dank der Labyrinthstruktur fallen keine zusätzlichen Kosten für etwaige Isoliermaterialien oder für Gasabführkanäle an. Des Weiteren ermöglicht die Labyrinthstruktur gleichzeitig zwei Funktionen, nämlich den Berührschutz sowie den Gasaustritt.

### Bezugszeichenlisten

- 1: Hochvoltspeicher
- 2: Energiespeichermodul
- 3: Speicherzellen
- 4,5: Anschlussterminals
- 6, 7: Wandung (Endplatten und Zuganker)
- 8: Aufsatz
- 9: Fortsatz
- 10: Absatz
- 11: Spalt
- 12: Trägerplatte
- 13: Deckel
- 14: Phase
- 15: erster Anteil
- 16: zweiter Anteil

## Patentansprüche

1. Hochvoltspeicher (1) zur Spannungsversorgung, insbesondere eines Kraftfahrzeugs, umfassend:
- ein Energiespeichermodul (2) mit mehreren elektrochemischen Speicherzellen (3) und einer die mehreren Speicherzellen (3) aufnehmenden Wandung (6, 7), wobei jede Speicherzelle (3) zumindest zwei elektrische Anschlussterminals (4, 5) aufweist, und
- einen Aufsatz (8) zum Kontaktieren und Abdecken der Anschlussterminals (4, 5),
- wobei der Aufsatz (8) die Wandung (6, 7) berührungslos überlappt, so dass ein Spalt (11) zu den Speicherzellen (3) frei bleibt,
**dadurch gekennzeichnet, dass**
- die Wandung (6, 7) einen vom Aufsatz (8) überlappten, nach innen versetzten Absatz umfasst, wobei der Absatz einen ersten Anteil, der sich senkrecht zur Wandung nach innen erstreckt, und einen am Ende des ersten Anteils befindlichen zweiten Anteil umfasst, der sich parallel zur Wandung (6, 7) und senkrecht zum ersten Anteil erstreckt, wobei der Spalt (11) zwischen dem Absatz und dem Aufsatz (8) ausgebildet ist.

2. Hochvoltspeicher nach Anspruch 1 , **dadurch gekennzeichnet, dass** die Speicherzellen (3) prismatische Speicherzellen (3) sind, die, zu mindestens einer Reihe gestapelt, hintereinander angeordnet und zwischen zwei Endplatten (6) über Zuganker (7) verspannt sind, wobei die Endplatten (6) und die Zuganker (7) die Wandung (6, 7) bilden.

3. Hochvoltspeicher nach einem der vorhergehenden Ansprüche, **dadurch gekennzeichnet, dass** der kleinste Spalt (11) zwischen Aufsatz (8) und Wandung (6, 7) zumindest 1 mm, insbesondere zumindest 2 mm, beträgt.

4. Hochvoltspeicher nach einem der vorhergehenden Ansprüche, **dadurch gekennzeichnet, dass** der Aufsatz (8) eine Trägerplatte (12) mit mehrere Zellverbindern zum Kontaktieren der Anschlussterminals (4, 5) und einen auf die Trägerplatte (12) aufgesetzten Deckel (13) umfasst.

5. Hochvoltspeicher nach Anspruch 4, **dadurch gekennzeichnet, dass** die Trägerplatte (12) die Wandung (6, 7) berührungslos überlappt.

6. Hochvoltspeicher nach einem der Ansprüche 4 oder 5, **dadurch gekennzeichnet, dass** der Deckel (13) die Trägerplatte (12) vollständig abdeckt.

7. Hochvoltspeicher nach einem der vorhergehenden Ansprüche, **dadurch gekennzeichnet, dass** die Anschlussterminals (4, 5) aller Speicherzellen (3) zu einer Anschlussfläche hin ausgerichtet sind.

8. Hochvoltspeicher nach einem der vorhergehenden Ansprüche, **dadurch gekennzeichnet, dass** der Aufsatz (8) die Anschlussterminals (4, 5) aller Speicherzellen (3) kontaktiert und abdeckt.

9. Hochvoltspeicher nach einem der vorhergehenden Ansprüche, **dadurch gekennzeichnet, dass** der Aufsatz (8) vollumfänglich die Wandung (6, 7) überlappt.

## Claims

1. High voltage storage device (1) for supplying power, in particular of a motor vehicle, said high voltage storage device comprising:
- an energy storage module (2) having multiple electrochemical storage cells (3) and a wall (6, 7) that receives the multiple storage cells (3), wherein each storage cell (3) comprises at least two electrical connection terminals (4, 5), and
- an attachment (8) for contacting and covering the connection terminals (4, 5),
- wherein the attachment (8) overlaps the wall (6, 7) in such a manner that physical contact is not made so that a gap (11) remains with respect to the storage cells (3),
**characterised in that**
- the wall (6, 7) comprises an inwardly offset shoulder that is overlapped by the attachment (8), wherein the shoulder comprises a first portion that extends inwards perpendicular to the wall, and a second portion that is located on the end of the first portion, said second portion extending parallel to the wall (6, 7) and perpendicular to the first portion, wherein the gap (11) is provided between the shoulder and the attachment (8).

2. High voltage storage device according to claim 1, **characterised in that** the storage cells (3) are prismatic storage cells (3) that are stacked in at least one row, are arranged one behind the other and are braced between two end plates (6) by way of tension anchors (7), wherein the end plates (6) and the tension anchors (7) form the wall (6, 7).

3. High voltage storage device according to any one of the preceding claims, **characterised in that** the smallest gap (11) between the attachment (8) and the wall (6, 7) is at least 1 mm, in particular at least 2 mm.

4. High voltage storage device according to any one of the preceding claims, **characterised in that** the attachment (8) comprises a carrier plate (12) having multiple cell connectors for contacting the connection terminals (4, 5) and a cover (13) that is placed on the carrier plate (12).

5. High voltage storage device according to claim 4, **characterised in that** the carrier plate (12) overlaps the wall (6, 7) in such a manner that physical contact is not made.

6. High voltage storage device according to any one of the claims 4 or 5, **characterised in that** the cover (13) entirely covers the carrier plate (12).

7. High voltage storage device according to any one of the preceding claims, **characterised in that** the connection terminals (4, 5) of all the storage cells (3) are oriented towards a connecting surface.

8. High voltage storage device according to any one of the preceding claims, **characterised in that** the attachment (8) contacts and covers the connection terminals (4, 5) of all the storage cells (3).

9. High voltage storage device according to any one of the preceding claims, **characterised in that** the attachment (8) entirely overlaps the wall (6, 7).

## Revendications

1. Accumulateur haute tension (1) pour l'alimentation électrique, en particulier d'un véhicule automobile, comportant :
- un module accumulateur d'énergie (2) ayant plusieurs cellules accumulatrices électrochimiques (3) et un cloisonnage (6, 7) logeant les plusieurs cellules accumulatrices (3), dans lequel chaque cellule accumulatrice (3) comprend au moins deux bornes de branchement électriques (4, 5), et
- un capuchon (8) pour contacter et recouvrir les bornes de branchement (4, 5),
- dans lequel le capuchon (8) recouvre en partie sans contact le cloisonnage (6, 7) de sorte qu'une fente (11) reste libre vers les cellules accumulatrices (3),
**caractérisé en ce que**
- le cloisonnage (6, 7) comporte un retrait décalé vers l'intérieur recouvert en partie par le capuchon (8), dans lequel le retrait comporte une première portion, qui s'étend vers l'intérieur verticalement au cloisonnage, et une seconde portion, qui se trouve à l'extrémité de la première portion et qui s'étend parallèle au cloisonnage (6, 7) et verticalement à la première portion, dans lequel la fente (11) est formée entre le retrait et le capuchon (8).

2. Accumulateur haute tension selon la revendication 1, **caractérisé en ce que** les cellules accumulatrices (3) sont des cellules accumulatrices prismatiques (3) qui sont entassées sur au moins une rangée, disposées les unes derrière les autres et serrées entre deux plaques d'extrémité (6) par un tirant (7), dans lequel les plaques d'extrémité (6) et le tirant (7) forment le cloisonnage (6, 7).

3. Accumulateur haute tension selon l'une quelconque des revendications précédentes, **caractérisé en ce que** la plus petite fente (11) entre le capuchon (8) et le cloisonnage (6, 7) est large d'au moins 1 mm, en particulier d'au moins 2 mm.

4. Accumulateur haute tension selon l'une quelconque des revendications précédentes, **caractérisé en ce que** le retrait (8) comporte une plaque porteuse (12) avec plusieurs connecteurs de cellule pour contacter les bornes de branchement (4, 5) et un couvercle (13) posé sur la plaque porteuse (12).

5. Accumulateur haute tension selon la revendication 4, **caractérisé en ce que** la plaque porteuse (12) recouvre en partie sans contact le cloisonnage (6, 7).

6. Accumulateur haute tension selon la revendication 4 ou 5, **caractérisé en ce que** le couvercle (13) recouvre entièrement la plaque porteuse (12).

7. Accumulateur haute tension selon l'une quelconque des revendications précédentes, **caractérisé en ce que** les bornes de branchement (4, 5) de toutes les cellules accumulatrices (3) sont orientées vers une surface de branchement.

8. Accumulateur haute tension selon l'une quelconque des revendications précédentes, **caractérisé en ce que** le capuchon (8) contacte et recouvre les bornes de branchement (4, 5) de toutes les cellules accumulatrices (3).

9. Accumulateur haute tension selon l'une quelconque des revendications précédentes, **caractérisé en ce que** le capuchon (8) recouvre totalement le cloisonnage (6, 7).
